# EUROPÄISCHE PATENTANMELDUNG

(11) **EP 1 072 184 A1**
(43) Veröffentlichungstag der Anmeldung: **31.01.2001**
(21) Anmeldenummer: 00113322.2
(22) Anmeldetag: 23.06.2000
(51) Int. Cl.: A01D 41/14, A01D 69/00, F16H 7/12

(54) **Antriebseinrichtung einer Gutbearbeitungs- und/oder Gutfördereinrichtung eines Erntevorsatzes**

(30) Priorität: 30.07.1999 US 364493
(71) Anmelder: DEERE & COMPANY, Moline, Illinois 61265-8098 (US)
(72) Erfinder: Becker, Klaus Ernst, East Moline, IL 61244 (US); McCredie, Paul John, Bettendorf IA 52722 (US)
(74) Vertreter: Holst, Sönke, Dr.

(57) **Zusammenfassung**

Die Erfindung bezieht sich auf eine Antriebseinrichtung einer Gutbearbeitungs- und/oder Gutfördereinrichtung eines Erntevorsatzes (10), mit einer Antriebswelle (46), an der ein erstes Leistungsübertragungselement befestigt ist, einer die Gutbearbeitungs- und/oder Gutfördereinrichtung antreibenden Welle (49), an der ein zweites Leistungsübertragungselement befestigt ist, einem endlosen, flexiblen Element, das mit dem ersten und zweiten Leistungsübertragungselement zusammenwirkt, um ein Antriebsmoment zu übertragen, und mit einer ersten Rolle (76), die an einem ersten Trum (60) des flexiblen Elements anliegt. Um bei einer Umkehrung der Antriebsrichtung auf einfache Weise eine Straffung des zweiten Trums (62) zu erreichen, wird vorgeschlagen, dass die erste Rolle (76) an einem ersten vorgespannten Schwenkarm (66) befestigt ist, und dass eine zweite Rolle (76) an einem zweiten vorgespannten Schwenkarm (64) befestigt ist und an einem zweiten Trum (62) des flexiblen Elements anliegt.

## Beschreibung

Die Erfindung betrifft eine Antriebseinrichtung einer Gutbearbeitungs- und/oder Gutfördereinrichtung eines Erntevorsatzes, mit einer Antriebswelle, an der ein erstes Leistungsübertragungselement befestigt ist, einer die Gutbearbeitungs- und/oder Gutfördereinrichtung antreibenden Welle, an der ein zweites Leistungsübertragungselement befestigt ist, einem endlosen, flexiblen Element, das mit dem ersten und zweiten Leistungsübertragungselement zusammenwirkt, um ein Antriebsmoment zu übertragen, und mit einer ersten Rolle, die an einem ersten Trum des flexiblen Elements anliegt.

Erntevorsätze für Erntemaschinen, wie Mähdrescher, umfassen in der Regel eine Anordnung zum Schneiden und Sammeln von Erntegut, die einen Teil des Ernteguts vom Feld erntet, um es anschließend in der Erntemaschine zu verarbeiten. Der Typ der Anordnung zum Schneiden und Sammeln unterscheidet sich je nach Typ des Erntevorsatzes. Ein Schneidwerk hat einen Mähwerksbalken an der Vorderseite und eine Haspel, um das Erntegut gegen den Mähwerksbalken zu drücken. Ein Maispflücker ist mit Pflückwalzen und Abstreifblechen ausgestattet, um die Maiskolben abzustreifen; Förderketten transportieren die Maiskolben nach hinten. Reihenabhängige Erntevorsätze haben zusammenwirkende, serpentinenförmige Gurte, um das Erntegut zu erfassen und zu halten, und rotierende Messer, um es zu schneiden. Wenn das Erntegut abgeschnitten ist, bewegt eine Förder- oder Transporteinrichtung das Erntegut seitlich über den Erntevorsatz zu einer Auslassöffnung, durch welche das Erntegut in den Schrägförderer eines Mähdreschers oder auf den Boden gefördert wird. Die Fördereinrichtung kann ein Schneckenförderer zum Zusammenführen des Ernteguts oder ein Fördergurt sein.

Schneckenförderer zum Zusammenführen des Ernteguts werden typischerweise mechanisch von einer Leistungsabgabeeinrichtung der Erntemaschine angetrieben. Eine sich seitlich entlang der Rückseite des Erntevorsatzes erstreckende Antriebswelle ist mit dem Schneckenförderer durch eine Antriebseinrichtung mit einem endlosen, flexiblen Element verbunden, das typischerweise eine Kette ist und um Ritzel umläuft. Eine Spannrolle greift in die durchhängende Seite der Kette ein, um die durchhängende Seite zu spannen. Die Spannrolle ist typischerweise in der Form eines Ritzels ausgestaltet, die einstellbar am Rahmen des Erntevorsatzes befestigt ist und in ihrer Position arretiert wird, um die gewünschte Spannung bereitzustellen. Während des Betriebs des Erntevorsatzes kann es jedoch nötig sein, die Richtung der Antriebseinrichtung des Schneckenförderers umzukehren, um eine Blockade des geschnittenen Ernteguts zu entfernen. Wenn das passiert, wird das normalerweise schlaffe Trum der Kette zum straffen Trum. Dadurch wird die Belastung der Spannrolle wesentlich vergrößert. Im Ergebnis muss die Spannrolle mit einer zusätzlichen Lastübernahmekapazität ausgelegt werden, die während des gelegentlichen Reversierens der Richtung der Antriebseinrichtung erforderlich ist. Dadurch werden beträchtliche Kosten zum Rahmen und zur Aufhängung der Spannrolle hinzugefügt.

Die der Erfindung zugrunde liegende Aufgabe wird darin gesehen, einen preiswürdigen Spannmechanismus für die Kette eines Erntevorsatzes bereitzustellen, der die bei einer Umkehrung der Antriebsrichtung auftretenden Kräfte aufnehmen kann.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, zwei Rollen zum Spannen des flexiblen Elements bereitzustellen, von denen jeweils eine an einem vorgespannten, schwenkbaren Schwenkarm befestigt ist und sich in Eingriff mit dem straffen bzw. schlaffen Trum des flexiblen Elements befindet. Das flexible Element ist in der Regel eine Kette oder ein Riemen. Es überträgt die Antriebskraft von einer eingehenden Welle, mit der ein Leistungsübertragungselement (z. B. Ritzel oder Riemenscheibe) verbunden ist, auf eine die Gutbearbeitungs - und/oder Gutfördereinrichtung antreibende Welle, die ebenfalls mit einem Leistungsübertragungselement (ebenfalls in der Regel ein Ritzel oder eine Riemenscheibe) versehen ist. Das flexible Element läuft um die beiden Leistungsübertragungselemente um. Wenn das im Normalbetrieb schlaffe Trum bei einer Umkehr der Antriebsrichtung straff wird, wird der Spannarm mit der am zunächst schlaffen Trum anliegenden Rolle durch das nunmehr straffe Trum beiseite geschwenkt. Gleichzeitig dreht sich der - ebenfalls vorgespannte - andere Schwenkarm und die andere Rolle übernimmt die Aufgabe, das zuvor straffe, nunmehr schlaffe Trum zu spannen.

Auf diese Weise erreicht man, dass das flexible Element sowohl im Normal- als auch im Reversierbetrieb gestrafft wird. Da die dem jeweils straffen Trum zugeordnete Rolle gegen die Vorspannung des Schwenkarms beiseite geschwenkt wird, müssen die Rollen nicht zur Aufnahme der vollen zu übertragenden Kraft ausgelegt sein. Sie können somit relativ preiswert und klein gewählt werden. Es ist keine zusätzliche Verstärkung der Leistungsfähigkeit der Rollen über das, was für den normalen Betrieb notwendig ist, hinaus erforderlich.

Vorzugsweise sind die Schwenkarme um ein gemeinsames Schwenklager drehbar gelagert. Sie können durch eine gemeinsame Feder gegeneinander vorgespannt sein. Durch die gemeinsam verwendeten Teile werden die Anzahl der Bauelemente, der Fertigungsaufwand und die Kosten vermindert. Die Verwendung einer Feder zur Erzeugung der Vorspannung der Schwenkarme hat den Vorteil, dass keine Einstellung der Spannung des flexiblen Elements notwendig ist; sie wird durch die Feder vorgegeben. Alternativ können die Spannarme einstellbar aneinander durch einen Zusammenbau mit einer Schraube und einer Mutter befestigt werden, um eine einstellbare Spannkraft für das flexible Element bereitzustellen.

Als Feder kommt insbesondere eine Torsionsfeder in Betracht, die platzsparend um das gemeinsame Schwenklager gewickelt werden kann, und deren Enden jeweils mit dem ersten bzw. zweiten Schwenkarm gekoppelt sind.

Weiterhin erweist sich eine Begrenzung der Schwenkwege, die die Schwenkarme relativ zueinander ausführen können, als zweckmäßig, um eine definierte Kraft des jeweils das flexible Element straffenden Schwenkarms zu erzeugen. Dazu kann ein Stift dienen, der an einem Schwenkarm befestigt ist und eine bogenförmige Öffnung im anderen Schwenkarm durchdringt. Die Enden der bogenförmigen Öffnung sind dann die Anschläge, die den Schwenkbereich der Schwenkarme zueinander (aber nicht den gemeinsamen Schwenkbereich) begrenzen.

Es ist vorgeschlagen, eine Hülse an beiden Schwenkarmen abzustützen. Sie kann an radialen Armen der Schwenkarme angebracht sein, die von einem mittleren Bereich der Schwenkarme ausgehen. Dabei können die Rollen an anderen Armen der Schwenkarme angebracht sein.

Das Schwenklager, an dem die beiden Schwenkarme des Spannmechanismus für das erste flexible Element drehbar gelagert sind, kann auch verwendet werden, eine dritte Rolle für eine zusätzlichen Antriebseinrichtung schwenkbar zu lagern. Ein Schneidwerk umfasst in der Regel einen Riemenantrieb für einen Mähwerksbalken an der Vorderseite des Schneidwerks. Der Mähwerksbalken kann durch dieselbe eingehende Antriebswelle angetrieben werden, die in der Nähe des Ritzels für den Antrieb des Schneckenförderers eine auf ihr angeordnete Riemenscheibe aufweist. Der Riemen erstreckt sich zu einer Riemenscheibe am Getriebe zum Antrieb der Messer des Mähwerksbalkens und hat eine Spannrolle, um die nötige Spannung im Treibriemen zu erzeugen. Durch das Anbringen der Spannrolle an demselben Schwenklager, das auch die Schwenkarme zum Spannen der Kette zum Antrieb des Schneckenförderers haltert, kann die Anzahl der Befestigungspunkte am Rahmen des Schneidwerks vermindert werden.

Der erfindungsgemäße Spannmechanismus kann an unterschiedlichen Typen von Erntevorsätzen Verwendung finden. Er kann an Antrieben eines Schneckenförderers, einer Haspel oder eines Mähwerksbalkens benutzt werden. Er kann auch bei Maispflückern eingesetzt werden, die Pflückwalzen zum Entfernen der Kolben aufweisen. Während der Spannmechanismus im Kontext eines Kettenantriebs gezeigt wird, kann er auch an einem Riemen- oder anderen Antrieb mit einem endlosen Element benutzt werden.

In der Zeichnung ist ein nachfolgend näher beschriebenes Ausführungsbeispiel der Erfindung dargestellt. Es zeigt:
- Fig. 1: eine perspektivische Ansicht eines typischen Schneidwerks für einen Mähdrescher mit einem erfindungsgemäßen Spannmechanismus;
- Fig. 2: eine Seitenansicht des Spannmechanismus, in der die Kette in normaler Antriebsrichtung dargestellt ist,
- Fig. 3: eine Seitenansicht des Spannmechanismus, in der die Kette in umgekehrter Antriebsrichtung dargestellt ist,
- Fig. 4: eine perspektivische Draufsicht auf das Ende des Erntevorsatzes, die den Spannmechanismus und den zugeordneten Messerantrieb zeigt;
- Fig. 5: eine Seitenansicht des Erntevorsatzes, die den Spannmechanismus und den zugeordneten Messerantrieb zeigt

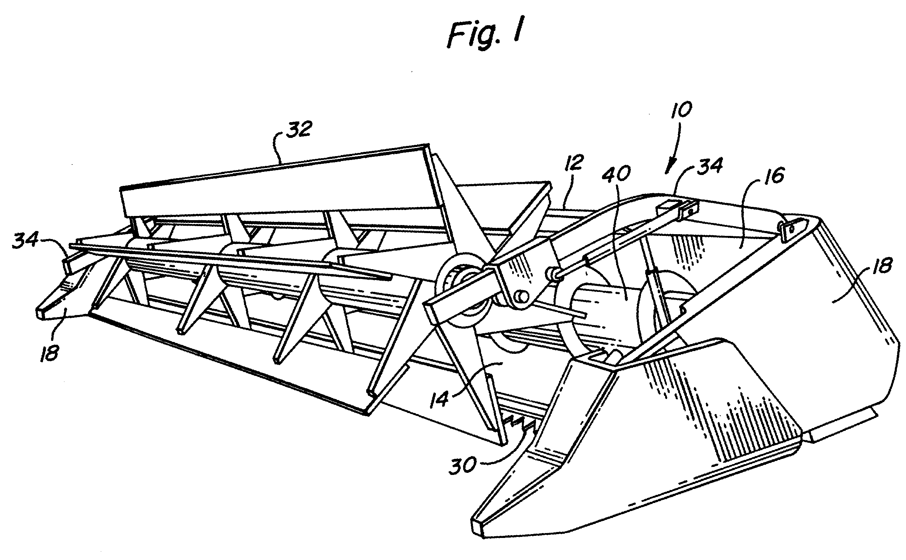

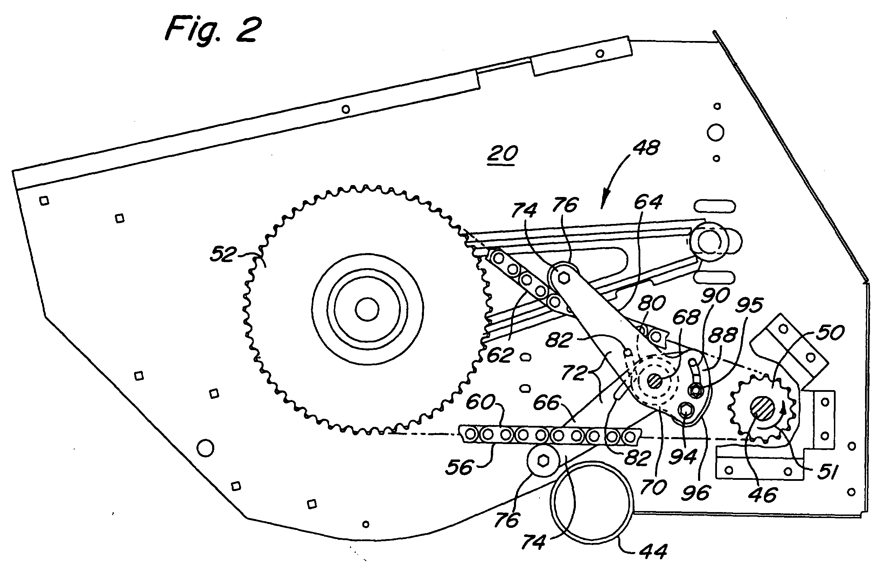

Der erfindungsgemäße Spannmechanismus einer Kette ist in einem in Figur 1 gezeigten Schneidwerk 10 verwirklicht. Das Schneidwerk 10 umfasst einen Rahmen, der insgesamt mit 12 gekennzeichnet ist, einen Boden 14, eine Rückwand 16 und Seitenwände 18 (Figur 2) an gegenüberliegenden Enden des Schneidwerks 10. Ein Mähwerksbalken 30 ist an der vorderen Kante des Bodens 14 bereitgestellt, um das Erntegut abzuschneiden. Eine Haspel 32 dreht sich oberhalb des Mähwerksbalkens 30, um das Erntegut gegen den Mähwerksbalken 30 zu drücken.

Die Haspel 32 ist am Rahmen 12 des Schneidwerks 10 an einem Paar von Haspelträgerarmen 34 in einer konventionellen Weise angebracht. Nachdem das Erntegut vom Mähwerksbalken 30 abgeschnitten wurde, bewegt ein Schneckenförderer 40 zum Zusammenführen des Ernteguts das Erntegut seitlich über das Schneidwerk 10 zu einer mittigen hinteren Öffnung (nicht gezeigt), um das abgeschnittene Erntegut in den Schrägförderer eines zugeordneten Mähdreschers zu leiten.

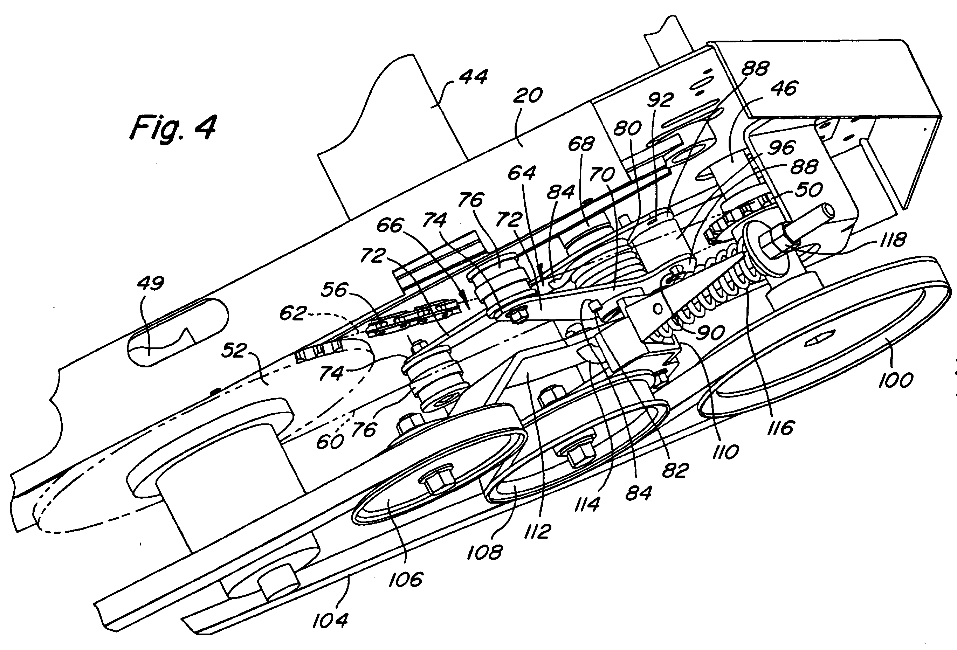

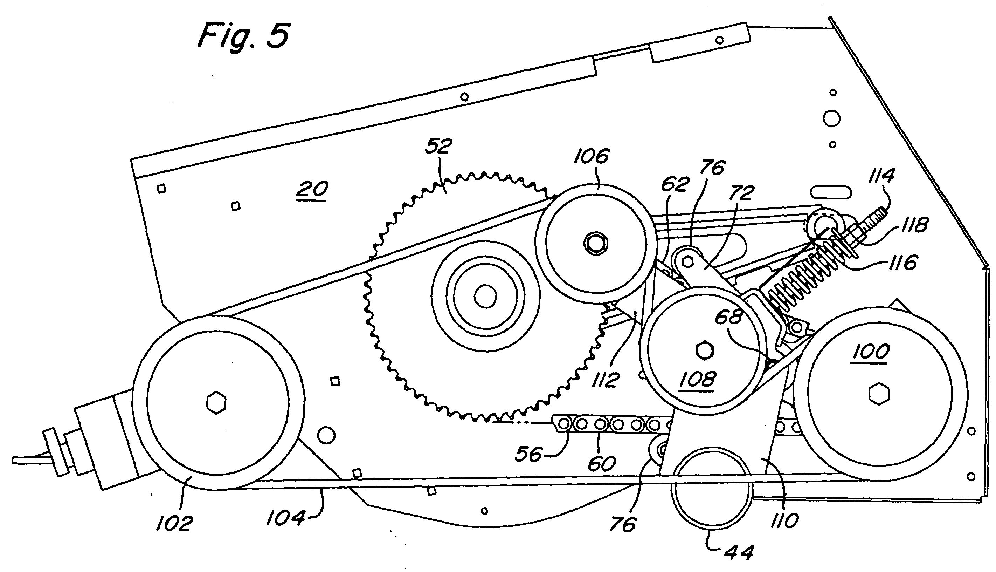

Es wird auf die Figuren 2 bis 5 verwiesen, in denen die Antriebseinrichtung zum Antrieb des Schneckenförderers 40 detaillierter dargestellt ist. Der Rahmen 12 des Schneidwerks 10 umfasst ein unteres hinteres Querrohr 44 und eine Endplatte 20, die mit dem Querrohr 44 verbunden ist. Eine Antriebswelle 46 (Figur 4) erstreckt sich seitlich hinter der Rückwand 16 und durch die Endplatte 20. Eine Antriebseinrichtung 48 verbindet die eingehende Antriebswelle 46 mit einer Welle 49 des Schneckenförderers 40, um ihn zu drehen. Die Antriebseinrichtung 48 umfasst ein erstes Leistungsübertragungselement in Form eines Ritzels 50, das mit der eingehenden Antriebswelle 46 gekoppelt ist. Ein zweites Leistungsübertragungselement in Form eines Ritzels 52 ist mit der Welle des Schneckenförderers 40 gekoppelt. Ein endloses, flexibles Element, in diesem Fall eine Kette 56, ist um die Ritzel 50 und 52 gewunden, um Rotationsleistung von der eingehenden Antriebswelle 46 zur Welle des Schneckenförderers 40 zu übertragen.

Während des normalen Betriebs dreht sich das Ritzel 50, betrachtet man Figur 2, in Gegenuhrzeigerrichtung, wie durch den Pfeil 51 angedeutet wird. Das untere Trum 60 der Kette 56 ist normalerweise straff, während das obere Trum 62 normalerweise schlaff ist. Der erfindungsgemäße Spannmechanismus umfasst ein Paar unterer und oberer Schwenkarme 64, 66, die beide an einem Schwenklager 68 befestigt sind, das sich von der Endplatte 20 erstreckt. Die Schwenkarme 64, 66 sind an einem mittleren Bereich 70 jedes Schwenkarms 64, 66 am Schwenklager 68 befestigt. Jeder Schwenkarm 64, 66 hat einen radialen Arm 72, der sich vom mittleren Bereich 70 nach außen erstreckt und an einem äußeren Ende 74 endet. Eine Rolle 76, vorzugsweise aus Kunststoff hergestellt, ist an jedem Schwenkarm 64, 66 am äußeren Ende 74 des radialen Armes 72 drehbar befestigt. Eine Torsionsfeder 80 ist um das Schwenklager 68 gewickelt und hat gegenüberliegende Enden 82, die in Öffnungen 84 in jedem der Schwenkarme 64, 66 eingesetzt sind. Die Torsionsfeder 80 presst gegen die Schwenkarme 64, 66, um die zwei Rollen 76 gegen die Trums 60, 62 der Kette 56 zu drücken.

Während des normalen Betriebs wird die Spannung im straffen Trum 60 der Kette 56 das straffe Trum 60 in einer geradlinigen Stellung halten, tangential zu den Ritzeln 50 und 52. Die Torsionsfeder 80 wird den oberen Schwenkarm 64 nach unten gegen das schlaffe Trum 62 vorspannen, um Spannung im Trum 62 zu erzeugen. Die Spannung wird durch die Kraft der Torsionsfeder 80 gesteuert. Keine Einstellung der Spannkraft ist nötig.

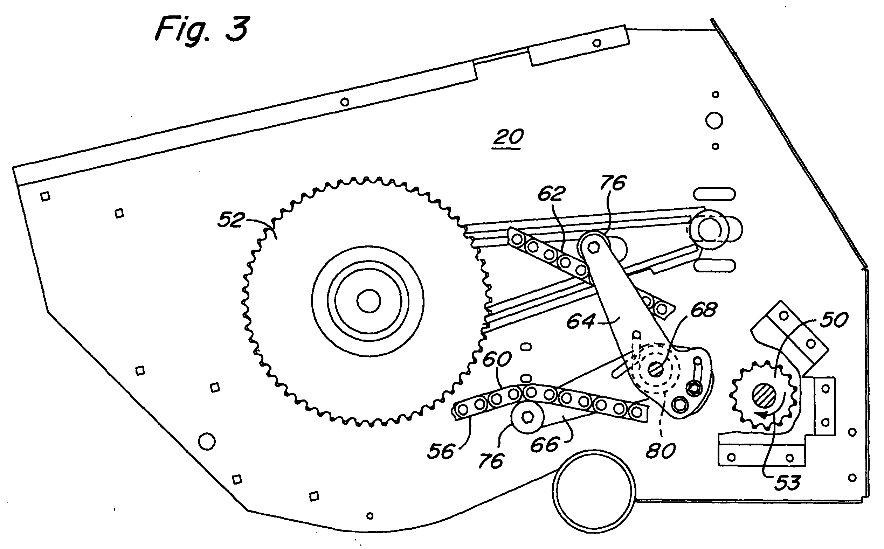

Wenn die Antriebsrichtung umgekehrt wird, wie in Figur 3 durch den Pfeil 53 dargestellt, wird das obere Trum 62 zum straffen Trum und das untere Trum 60 wird zum schlaffen Trum. Das wird das obere Trum 62 dazu bringen, eine geradlinie Position einzunehmen, die tangential zu den Ritzeln 50, 52 verläuft, was bedingt, dass sich der obere Schwenkarm 64 nach oben dreht. Die Torsionsfeder 80 dreht den unteren Schwenkarm 66 nach oben gegen das nun schlaffe untere Trum 60 der Kette 56, um Spannung in unteren Trum 60 zu erzeugen. Auf diese Weise wird der Spannmechanismus immer eine Spannung im schlaffen Trum der Kette 56 erzeugen und eine Überlast-Bedingung vermeiden, die auftritt, wenn ein fester Kettenspanner nur auf ein Trum der Kette wirkt.

Die Schwenkarme 64, 66 weisen zusätzlich einen zweiten radialen Arm 88 auf. Der radiale Arm 88 umfasst einen bogenförmigen Schlitz 90, der im wesentlichen konzentrisch zum Schwenklager 68 ist, und eine Öffnung 92, die sich in derselben radialen Entfernung vom Schwenklager 68 befindet wie der Schlitz 90. Ein Stift in Form einer Befestigungseinrichtung 94 mit Mutter und Schraube ist durch die Öffnung 92 eines Schwenkarms und den Schlitz 90 des anderen Schwenkarmes gesteckt. Der Stift 94 begrenzt die Drehung der Schwenkarme 64, 66 relativ zueinander auf die Ersteckung des Schlitzes 90. Das ist in erster Linie eine Hilfe während des Zusammenbaus, um die Bewegung der Schwenkarme 64, 66 zu begrenzen, bevor die Kette 56 auf die Ritzel 50, 52 aufgelegt wird. In der gezeigten, bevorzugten Ausführungsform sind die Schwenkarme 64, 66 miteinander identisch.

Wie oben beschrieben, sind die Schwenkarme 64, 66 einzeln um das Schwenklager 68 drehbar und aneinander durch die Torsionsfeder 80 gekoppelt, um die Spannkraft bereitzustellen. Dadurch wird ein Spannmechanismus bereitgestellt, der keine Einstellung benötigt. Die gewünschte Spannkraft wird durch die Feder 80 bereitgestellt. In einer alternativen Ausführungsform können die Befestigungseinrichtungen 94 mit Mutter und Schraube verwendet werden, um die Schwenkarme 64, 66 aneinander zu befestigen, nachdem die Spreizung zwischen den zwei Rollen 76 eingestellt wurde, um eine gewünschte Kettenspannung zu erzeugen.

Eine Hülse 96 umschließt die Befestigungseinrichtung 94 mit Mutter und Schraube und wird durch einen zweite Befestigungseinrichtung 95 mit Mutter und Schraube an Ort und Stelle gehalten. Die Hülse 96 kann mit der Kette 56 in Eingriff gelangen, um sicherzustellen, dass die Kette 56 nicht die Torsionsfeder 80 berührt. Die Hülse 96 ist in der dargestellten Ausführungsform wegen der großen Nähe des Schwenklagers 68 zum Ritzel 50 und des kleinen Durchmessers des Ritzels 50 zweckmäßig.

In der dargestellten Ausführungsform des Erntevorsatzes wird auch der Mähwerksbalken 30 durch die eingehende Antriebswelle 46 angetrieben. Ein anderes Kraftübertragungselement in Form einer Riemenscheibe 100 ist an die eingehende Antriebswelle 46 gekoppelt. Ein Riemen 104 ist um die Riemenscheibe 100 und um eine Riemenscheibe 102 am Gehäuse des Antriebsgetriebes des Messerbalkens 30 gelegt. Der Riemen ist außerdem um ein Paar mitlaufender Rollen 106 und 108 gelegt. Die mitlaufendende Rolle 108 ist drehbar an einer Rahmenklammer 110 befestigt, die wiederum am Querrohr 44 festgelegt ist. Die mitlaufende Rolle 106 ist eine Spannrolle und an einem dritten Schwenkarm 112 befestigt, der auch am Schwenklager 68 abgestützt ist. Eine Stange 114 ist mit dem Schwenkarm 112 gekoppelt und verläuft durch eine Feder 116, um die mitlaufende Rolle 106 vorzuspannen. Ein Zusammenbau 118 mit Mutter und Unterlegscheibe, der auf die Stange 114 geschraubt ist, wird benutzt, um die Kompression der Feder 116 einzustellen.

Die Verwendung derselben Schwenklagerung 68 sowohl für die Kettenspanner als auch für die Riemenspanner vermindert die Kosten dadurch, dass eine schwenkbare Anbringung an der Endplatte 20 eingespart wird. Der erfindungsgemäße Spannmechanismus stellt weitere Vorzüge bereit, indem er die Kräfte, die auf die Spannmechanismen ausgeübt werden, auf die von der Torsionsfeder 80 erzeugten Kräfte einschränkt. Daher müssen die Komponenten des Spannmechanismus auch nicht für die Fälle verstärkt werden, in denen die Antriebsrichtung umgekehrt wird.

Während der Spannmechanismus zur Verwendung in der Antriebseinrichtung der Gutfördereinrichtung beschrieben wurde, kann er auch beim Antrieb der Schneideinrichtung und der Raffeinrichtung (Haspel) verwendet werden.

## Patentansprüche

1. Antriebseinrichtung einer Gutbearbeitungs- und/oder Gutfördereinrichtung eines Erntevorsatzes (10), mit einer Antriebswelle (46), an der ein erstes Leistungsübertragungselement befestigt ist, einer die Gutbearbeitungs- und/oder Gutfördereinrichtung antreibenden Welle (49), an der ein zweites Leistungsübertragungselement befestigt ist, einem endlosen, flexiblen Element, das mit dem ersten und zweiten Leistungsübertragungselement zusammenwirkt, um ein Antriebsmoment zu übertragen, und mit einer ersten Rolle (76), die an einem ersten Trum (60) des flexiblen Elements anliegt, dadurch gekennzeichnet, dass die erste Rolle (76) an einem ersten vorgespannten Schwenkarm (66) befestigt ist, und dass eine zweite Rolle (76) an einem zweiten vorgespannten Schwenkarm (64) befestigt ist und an einem zweiten Trum (62) des flexiblen Elements anliegt.

2. Antriebseinrichtung nach Anspruch 1, dadurch gekennzeichnet, dass die erste Rolle (76) das schlaffe erste Trum (60) des flexiblen Elements strafft, wenn es sich in eine erste Richtung bewegt, während das zweite Trum (62) straff ist, wobei sich die Schwenkarme (64, 66) bei einer Umkehrung der Bewegungsrichtung des flexiblen Elements bewegen und die zweite Rolle (76) das schlaffe zweite Trum (60) des flexiblen Elements strafft, wenn es sich in die zweite Richtung bewegt, während das erste Trum (62) straff ist.

3. Antriebseinrichtung nach Anspruch 1 oder 2, dadurch gekennzeichnet, dass der erste Schwenkarm (66) und der zweite Schwenkarm (64) um ein gemeinsames Schwenklager (68) schwenkbar gelagert sind.

4. Antriebseinrichtung nach einem der vorhergehenden Ansprüche, dadurch gekennzeichnet, dass der erste Schwenkarm (66) und der zweite Schwenkarm (64) gegeneinander vorgespannt sind.

5. Antriebseinrichtung nach Anspruch 4, dadurch gekennzeichnet, dass der erste Schwenkarm (66) und der zweite Schwenkarm (64) durch eine Feder, inbesondere eine Torsionsfeder (80), gegeneinander vorgespannt sind.

6. Antriebseinrichtung nach Anspruch 5, dadurch gekennzeichnet, dass die Torsionsfeder (80) um das Schwenklager (68) gewickelt ist und gegenüberliegende Enden aufweist, von denen je eines mit dem ersten Schwenkarm (66) und dem zweiten Schwenkarm (64) gekoppelt ist.

7. Antriebseinrichtung nach einem der vorhergehenden Ansprüche, dadurch gekennzeichnet, dass der erste Schwenkarm (66) und der zweite Schwenkarm (64) miteinander gekoppelt sind, um die Bewegung der Schwenkarme (64, 66) relativ zueinander zu begrenzen.

8. Antriebseinrichtung nach Anspruch 7, dadurch gekennzeichnet, dass die Schwenkarme (64, 66) aneinander durch einen Stift (94) gekoppelt sind, der sich sowohl durch den ersten als auch durch den zweiten Schwenkarm parallel zur Achse der Schwenklagerung (68) erstreckt, wobei der Stift (94) einen bogenförmigen, zur Achse der Schwenklagerung (68) konzentrischen Schlitz (90) in einem Schwenkarm (66) durchdringt.

9. Antriebseinrichtung nach einem der Ansprüche 3 bis 8, dadurch gekennzeichnet, dass eine in Eingriff mit dem flexiblen Element bringbare Hülse (96) durch radiale Arme (88) der Schwenkarme (64, 66) gemeinsam gehaltert wird, wobei die radialen Arme (88) von einem mittleren Bereich (70) der Schwenkarme (64, 66) ausgehen und die Rollen (76) an anderen radialen Armen (72) der Schwenkarme (64, 66) angebracht sind.

10. Antriebseinrichtung nach einem der Ansprüche 3 bis 9, dadurch gekennzeichnet, dass ein zweites endloses, flexibles Element mit einem dritten und vierten Leistungsübertragungselement zusammenwirkt, wobei eine dritte spannende Rolle (106) am zweiten flexiblen Element anliegt, um es zu spannen, und die dritte Rolle (106) an einem dritten Schwenkarm (112) befestigt ist, der am Schwenklager (68) schwenkbar gelagert ist.

11. Erntevorsatz mit einer Antriebseinrichtung nach einem der vorhergehenden Ansprüche, dadurch gekennzeichnet, dass die Gutbearbeitungs- und/oder Gutfördereinrichtung ein Schneckenförderer (40) und/oder ein Mähwerksbalken (30) und/oder eine Haspel (32) und/oder eine Pflückeinrichtung mit einer Pflückwalze ist.
